(19) Europäisches Patentamt

European Patent Office

Office européen des brevets

(11) **EP 3 673 741 B1**

(12) **EUROPEAN PATENT SPECIFICATION**

(45) Date of publication and mention
of the grant of the patent:
**21.07.2021  Bulletin 2021/29**

(21) Application number: **19217497.7**

(22) Date of filing: **18.12.2019**

(51) Int Cl.:
*A23C 19/024* *(2006.01)*      *A23C 19/076* *(2006.01)*

(54) **METHOD FOR PRODUCING CURD CHEESE OF A PREDETERMINED VISCOSITY**

VERFAHREN ZUR HERSTELLUNG VON QUARK MIT EINER VORGEGEBENEN VISKOSITÄT

PROCÉDÉ DE PRODUCTION DE CAILLEBOTTE D'UNE VISCOSITÉ PRÉDÉTERMINÉE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.12.2018  BE 201805951**

(43) Date of publication of application:
**01.07.2020  Bulletin 2020/27**

(73) Proprietor: **Pur Natur Invest
9770 Kruishoutem (BE)**

(72) Inventor: **PATTEEUW, Lieven
8470 Gistel (BE)**

(74) Representative: **Gevers Patents
Intellectual Property House
Holidaystraat 5
1831 Diegem (BE)**

(56) References cited:
**DE-A1- 2 636 882     US-A- 5 853 786**

- **SODININ ISABELLE ET AL: "Manufacturing Yoghurt and Fermented Milks, Milk and milk-based dairy ingredients", MANUFACTURING YOGURT AND FERMENTED MILKS, BLACKWELL PUBLISHING, PAGE(S) 167 - 177 , 1 January 2006 (2006-01-01), XP002497557, Retrieved from the Internet: URL:http://books.google.nl/books?id=lroZmO N2tHsC&pg=PA167&lpg=PA167&dq=sodini,+mil k- based+dairy+ingredients&source=web&ots=Sp C QK9-5Zy&sig=ydp-IP7trkP4OEosf7Sbt6LzDPQ& hl =en&sa=X&oi=book_result&resnum=1&ct=resul t [retrieved on 2008-09-26]**

**Description**

The present invention relates to a method for producing curd cheese of a predetermined viscosity from batches of fresh skimmed milk having a variable protein content ($E_m$).

In the method for producing the curd cheese, batches of fresh skimmed milk are used as raw material and the protein content ($E_m$) of each batch is determined. The milk is pasteurized, and also homogenized, at a temperature of at least 85°C. After cooling, the milk is acidified and curdled with lactic acid bacteria so as to produce curds. To this end, lactic acid bacteria and rennet are added to the milk. The acidified milk is then thermized at a temperature of at least 56°C, killing off the lactic acid bacteria. Moreover, the serum or whey proteins are thereby denatured, so that they no longer end up in the whey, thus contributing to the consistency and stability of the curd cheese, more in particular of the thus produced thermic curd cheese. After allowing the thermized milk to cool again, it is separated, by means of a centrifuge, into whey, containing a predetermined amount of protein (Ew), and the curd cheese. Herein, the thermized milk is fed to the centrifuge at a predetermined flow rate (Qm) and the curd cheese is separated out of the centrifuge at a predetermined constant flow rate ($Q_k$). The whey is also separated out of the centrifuge, at a flow rate (Qw) equaling the difference between the flow rate of the milk and the flow rate of the curd cheese. The flow rate at which the milk is fed to the centrifuge is determined as a function of the protein content ($E_m$) of the milk so as to obtain the desired protein content in the curd cheese. The protein content of the milk is preferably determined after its pasteurization.

In the case of curd cheese, also known as fromage frais, it is important for a certain type of curd cheese to always have a similar viscosity or consistency. In this way, a product of constant quality can be offered to the consumer. Moreover, the viscosity of the curd cheese is important to its stability. A more viscous curd cheese will exhibit syneresis less quickly and will thus remain stable for longer than a less viscous curd cheese. However, the curd cheese should not be too viscous either, as it is then too firm and thus produces a different taste sensation, and may also be more difficult to pour from the packaging, for example from a glass jar.

The viscosity of the curd cheese is for example measured 24 hours after its production. As the consistency of the curd cheese normally increases over time, it is important to check the viscosity at the same time after production. This usually takes place on day one and on day seven after the production, and one final time on a sample preserved until the expiration date of the curd cheese.

The production of the curd cheese is based on skimmed milk. This skimmed milk is obtained by centrifuging the majority of the fat content out of fresh whole milk. Starting from skimmed milk offers the advantage that no milk fat will end up in the whey and thus go to waste. In order to obtain whole or semi-skinned curd cheese, after centrifuging out the curd cheese, the necessary cream will be added to it.

It is commonly known that the viscosity or consistency of curd cheese depends on its protein content. In thermic curd cheese, this is provided by both the caseins, which are denatured by acidifying and curdling, and the serum proteins, which are primarily denatured by the thermization of the acidified milk. In order to maintain this protein content constant, it was common practice in the past to standardize the protein content of the skimmed milk by adding skimmed milk powder. This, however, had the disadvantage that skimmed milk powder only contains 30 to 35% of protein, and for the remainder sugars, which disappear via the whey during centrifuging of the curd cheese. As whey is not a valuable product, the majority of the skimmed milk powder used is thus lost, and the standardization of the milk by means of skimmed milk powder was therefore an expensive solution.

However, in order to keep the protein content in the curd cheese constant, it is also possible to use more or less skimmed milk for the production of a same quantity of curd cheese. When the skimmed milk has a lower protein content, this milk will be fed to the centrifuge at a higher flow rate, so that more protein ends up in the curd cheese, as it is produced at a constant flow rate. When more milk is used, more whey will be produced as well, but the cost thereof is lower compared to the cost of standardizing the milk using skimmed milk powder. Conversely, when the skimmed milk has a higher protein content, this milk will be fed to the centrifuge at a lower flow rate, so that less protein ends up in the curd cheese and less whey will be produced. By increasing or decreasing the flow rate of the milk, it is thus possible to keep the protein content in the curd cheese constant at varying protein contents in the different batches of the skimmed milk.

The protein content of the skimmed milk varies from batch to batch, even though these batches are composed of milk from different farmsThe protein content of the milk, in particular cow's milk, also varies over the seasons. In fall and winter, the protein content of cow's milk is usually noticeably higher than in spring and summer. This is shown for example by the measurement data indicated in table 1 of the paper "Effect of pasteurisation and season on milk composition and ripening of Ras cheese" by Hattem, H. E. et al. in the Journal of Brewing and Distilling Vol. 3(2), pp. 15-22, of March 2012. According to this paper, the cow's milk had a total protein content that was on average 3.38% in winter, 3.31% in spring and 3.04% in summer.

US 5 853 786 A discloses that process parameters in the production of fresh cheese are dependent on the quality of the milk used as the starting material, which may, for instance, vary considerably due to seasonal fluctuations. In case of incorrect viscosity setting of the liquid product stream, considerable fluctuations of quality and consistency appear in the end product, as well as a lower filling efficiency or utilization of the plant. Said document solves this problem in that the viscosity setting of the liquid product stream is effected by a shearing action on the product stream inside a closed circulation system.

The aim of the present invention is now to provide an improved method for producing curd cheese by which the viscosity of the curd cheese can be controlled, and thus kept more constant, to an even better extent.

The inventor has found that even when the protein content in the produced curd cheese is kept constant, by using the appropriate amount of milk for the production of the curd cheese as a function of its protein content, the viscosity of the curd cheese was surprisingly still influenced by the protein content of the milk used. More in particular, the inventor has found a correlation between the average viscosity of the curd cheese and the average variation of the protein content of the milk over the seasons. Moreover, the inventor has found that in practice, in the production of curd cheese, the curd cheese produced was often too runny when the milk had a high protein content, and that it was therefore necessary in practice to slightly adjust the amount of milk by feel.

The invention, now, more in particular aims to further limit the variation observed by the inventor in the viscosity of a same curd cheese as a result of the variation in the protein content of the fresh milk.

To this end, the method according to the invention is characterized in that the flow rate ($Q_m$) at which the thermized milk is fed to the centrifuge is determined by the following formula:

$$0.99 * \frac{(E_k - E_w) * Q_k}{E_m - E_w} < Q_m < 1.01 * \frac{(E_k - E_w) * Q_k}{E_m - E_w}$$

in which:

$E_k$ = the protein content in the curd cheese, expressed in g/ml;
$E_w$ = the protein content in the whey, expressed in g/ml;
$E_m$ = the protein content in the milk, expressed in g/ml;
$Q_k$ = the flow rate at which the curd cheese is separated out of the centrifuge; and
$Q_m$ = the flow rate at which the milk is fed to the centrifuge,

wherein $E_k$ equals a predetermined constant protein content ($E_{kc}$) of the curd cheese with which said viscosity of the curd cheese is obtained when the protein content ($E_m$) of the milk in said batch is lower than or equal to 0.0332 g/ml, wherein said predetermined constant protein content ($E_{kc}$) of the curd cheese is higher than the protein content ($E_m$) of said milk, and

wherein $E_k$ is determined by the following formula:

$$E_k = E_{kc} + 120.4 * E_m^2 - 8 * E_m + 0.1329$$

when the protein content ($E_m$) of the milk in said batch is higher than 0.0332 g/ml.

According to the invention, it was surprisingly found that when starting from a batch of skimmed milk having a higher protein content, more protein has to be provided in the curd cheese to obtain a same viscosity. The amount of protein in the curd cheese had to even increase exponentially.

A possible explanation of this effect could be based on the contribution of the serum proteins to the viscosity of the curd cheese. The proteins in whole cow's milk consist of about 82% caseins and about 18% serum proteins. As the method starts from fresh skimmed milk, this milk has been subjected to another centrifuging process beforehand, wherein not only fat, but also part of the water and the proteins present therein are removed from the milk. According to the inventor, a relatively higher amount of serum proteins would be lost via the separated fat fraction, so that the remaining content of serum proteins in the skimmed milk would be even lower and also have a more constant value than the caseins. This would mean that in skimmed milk having a high protein content, the ratio between the casein content and the serum protein content would be higher than in skimmed milk having a low protein content.

As is for example shown in the paper "The mechanism and properties of acid-coagulated milk gels" by Chanokphat Phadungath in Songklanakarin J. Sci. Technol. 2005, 27(2) : 433-448, the serum proteins, in denatured form, have an important effect on the rheological properties of acidified milk gels, as the denatured serum proteins linked to the casein micelles would mutually interact and thus form bridges that would increase the strength of the bonds and the number of bonds between the protein particles.

The observations by the present inventor could thus be explained by the fact that the small amount of serum proteins is essential to the consistency or viscosity of the curd cheese, and that this amount of serum proteins should therefore be present in the curd cheese even when the curd cheese contains the required amount of caseins.

According to the invention, it was found that when the protein content in the curd cheese is raised exponentially according to the above formula when the skimmed milk has a higher protein content, and thus presumably a relatively lower amount of serum proteins, curd cheese having a same viscosity can be produced using skimmed milk having a high protein content as using skimmed milk having a low protein content.

In an embodiment of the method according to the invention, the protein content of the milk in the batch is determined after pasteurizing and homogenizing the milk, but before acidifying it.

In this way, the protein content is always determined in the same production stage and therefore cannot give rise to deviations. As bacteriological acidification of the milk takes up a considerable amount of time, it also affords the time needed to determine the protein content before the acidified milk needs to be centrifuged and the required milk flow rate needs to be established.

In an embodiment of the method according to the invention, the viscosity of the produced curd cheese is determined after a predetermined period of time after the curd cheese leaving the centrifuge, in particular after a period of time of 24 hours.

By always measuring the viscosity at a same time after the production of the curd cheese, the viscosity of the curd cheese can be monitored correctly.

In an embodiment of the method according to the invention, the pasteurization of the milk is carried out for 5 to 15 minutes at a temperature comprised between 85°C and 95°C.

Such temperatures and time durations ensure a complete pasteurization of the milk. Moreover, this pasteurization may contribute to the denaturation of the serum proteins.

In an embodiment of the method according to the invention, the thermization of the acidified milk is carried out so as to denature the serum proteins present in the acidified milk. In particular, the thermization of the acidified milk is carried out at a temperature comprised between 56°C and 65°C, preferably at a temperature of about 60°C, for at most 3 minutes.

By denaturing the serum proteins, they are prevented from ending up in the whey. Furthermore, the denatured serum proteins may bind to the denatured casein micelles and thus greatly contribute to the viscosity or consistency of the curd cheese.

In an embodiment of the method according to the invention, the curd cheese leaving the centrifuge is mixed with cream, fruit and/or yogurt.

Thus, different types of curd cheese can be produced from a same basic type of curd cheese. For monitoring or determining the viscosity of the curd cheese, it is however preferable to take the necessary samples before mixing these additional ingredients with the curd cheese.

In an embodiment of the method according to the invention, live cultures are added to the curd cheese.

These live cultures thus remain in the curd cheese in living form, and may thus provide the desired health effects.

In an embodiment of the method according to the invention, the live cultures are fed to the centrifuge.

In this way, they are optimally mixed with the curd cheese and are also immediately present in the curd cheese, before any other ingredients are added to it. Even when no further ingredients are added, the live cultures are immediately present in the curd cheese and thus no longer need to be mixed into it. Mixing the live cultures homogenously into the curd cheese is, in fact, not that easy, considering the small amount of cultures required and considering the viscosity of the curd cheese. However, this problem is solved by adding them to the centrifuge.

In an embodiment of the method according to the invention, said skimmed milk has a fat content which is lower than 0.005 g/ml.

In this way, no fat or almost no fat is lost through the separation of the whey.

In an embodiment of the method according to the invention, the pasteurized milk is acidified to a pH below 4.75, preferably to a pH of 4.45 to 4.50, before being thermized.

The advantage of such a low pH is that it not only allows the caseins to be optimally denatured, but that such a low pH is also beneficial for denaturing the serum proteins during the subsequent therm ization step.

In an embodiment of the method according to the invention, said lactic acid bacteria comprise *Lactococcus lactis* spp. *lactis, Leuconostoc mesenteroides* spp. *cremoris* and *Lactococcus lactis* spp. *lactis* biovar. *diacetylactis*.

These bacteria ensure the acidification of the milk and further contribute to the aroma of the curd cheese.

In an embodiment of the method according to the invention, rennet is subsequently added to the milk for curdling the milk.

Further advantages and particularities of the invention will become clear from the following description of a number of particular embodiments of the method according to the invention. This description is given with reference to the appended drawings, wherein:

Figure 1 schematically shows an overview of a particular embodiment of the production process of curd cheese;
Figure 2 shows the data of the variation of the protein content of the skimmed milk over the time period from July 2016 to July 2018, and of the variation of the viscosity of the curd cheese produced with said skimmed milk;

Figure 3 shows the protein content in curd cheese as a function of the protein content of the milk according to the invention, and with a constant protein content in the curd cheese;

Figure 4 shows the required flow rate of skimmed milk in order to obtain the protein contents in the curd cheese as a function of the protein content in the milk as shown in figure 3;

Figure 5 is a same figure as figure 3, in which, however, the basic protein content of the curd cheese was set to 8% instead of to 6.73%; and

Figure 6 is a same figure as figure 4, but drawn up for the protein contents in the curd cheese as shown in figure 5.

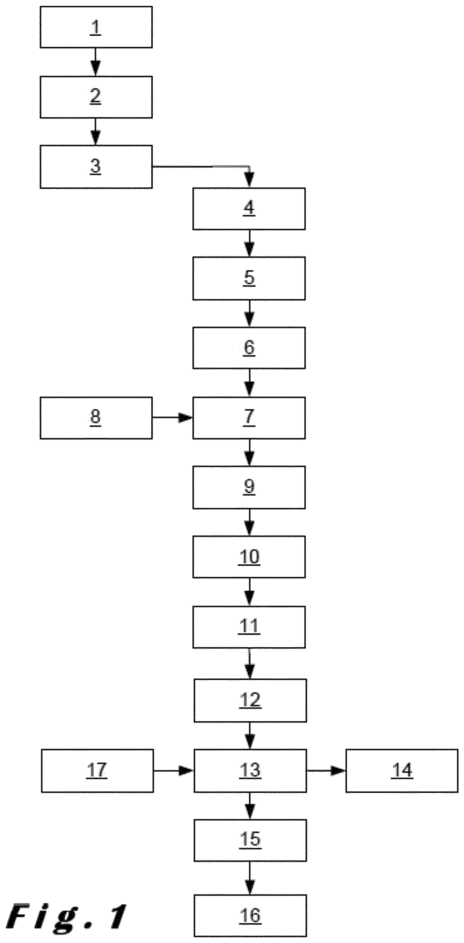

In the production process for preparing curd cheese as schematically shown in figure 1, the supplied milk is received in step 1 and, after filtering in step 2, is stored in tanks in step 3. The supplied milk is skimmed milk produced by skimming fresh whole milk by means of a centrifuge. After arriving in the dairy farm, the skimmed milk is immediately processed or subjected to a thermal treatment increasing its storage life by at most 48 hours. In the method according to the invention, fresh milk is used as starting material. Fresh milk is intended to mean milk that was not reconstituted from powdered milk. Thus, the milk as such may optionally be a few days old already. Furthermore, it is also essential for the milk to have been skimmed.

In a subsequent step 4, a batch is taken from the stored milk. After filtering the mixture in step 5, the milk is then pasteurized and homogenized in step 6, in particular at a temperature of at least 88°C for at least 8 minutes.

In the subsequent step 7, the pasteurized and homogenized mixture is then cooled to incubation temperature, in particular to a temperature of 40 to 45°C, after which the mixture is inoculated with the lactic acid bacteria in step 8. In particular, *Lactococcus lactis* spp. *lactis, Leuconostoc mesenteroides* spp. *cremoris* and *Lactococcus lactis* spp. *lactis* biovar. *diacetylactis* are used as lactic acid bacteria. The former two mainly cause the acidification of the milk, while the latter will produce the aroma of the curd cheese. Furthermore, rennet is added to the cooled and pasteurized milk, which will contribute to the partial degradation of the caseins.

Finally, a sample is taken of the cooled and pasteurized milk to determine the protein content of said milk. Based on this protein content, the amount of milk to be used for the production of the curd cheese will be determined.

In step 9, the inoculated milk is then further fermented and curdled. The fermentation is stopped when the pH of the mixture has fallen below a predetermined value, in particular below a pH of 4.75, and preferably to a pH of 4.45 to 4.50. This low pH leads to a denaturation of the caseins in the milk so as to produce curds.

After fermenting or acidifying the milk, the acidified milk, in step 10, is thermized at a temperature of at least 56°C, in particular at a temperature of 60°C, for several minutes, preferably fewer than 3 minutes. This thermization kills off the lactic acid bacteria and denatures the serum proteins, through the combination of the high temperature and low pH. After cooling the thermized milk, in step 11, the milk is led through a filter in step 12, and fed to a centrifuge 13 at a predetermined flow rate.

The centrifuge 13 is set up to produce the curd cheese at a predetermined fixed or constant flow rate $Q_k$. The flow rate Qm at which the milk is fed to the centrifuge is variable, and is dependent on the protein content $E_m$ in the pasteurized milk. Likewise, the flow rate Qw at which the whey 14 is discharged from the centrifuge is dependent on the protein content $E_m$ in the milk, as this flow rate Qw is the difference between the flow rate Qm of the milk and the fixed flow rate $Q_k$ of the curd cheese. By increasing or decreasing the flow rate Qm of the milk, the protein content in the curd cheese can be controlled.

The curd cheese separated out of the centrifuge 13 is further cooled in step 15 to a temperature below 15°C, and is then stored in a tank 16. From this tank 16, it can then be filled into smaller containers. Optionally, cream may be mixed into the curd cheese first to increase its fat content. Alternatively, fruit or even yogurt or other ingredients may be mixed with the curd cheese mixed before filling it.

If live cultures are to be added to the curd cheese, they are preferably first dissolved in fresh whey, after which the whole is added to the centrifuge in step 17. The small amount of cultures can thus be accurately dosed and homogenously distributed into the curd cheese.

The viscosity of the curd cheese is measured one day after production, seven days after production and on the expiration date. The viscosities of the curd cheese are determined by means of a Brookfield DV2T viscosity meter equipped with spindle 93, with this spindle being placed not in but onto the curd cheese. After auto zeroing the viscosity meter, the spindle is placed onto the meter. The "method single point average" is set to 48 sec, a speed of 2.5 is selected, and the end condition is 48 sec. The pin at the back of the meter should be pressed in so that measurements are taken from the top down. In this way, the structure of the curd cheese is not broken during measurements, as once the structure is broken, measurements will be incorrect. The indicated viscosity is expressed in Pa.s.

According to the invention, different types of curd cheese can be made, in particular having different consistencies or viscosities. These viscosities are mainly determined by the protein content of the curd cheese.

For any given recipe/type of curd cheese, it is important that a uniform product be obtained, in particular when starting from milk of which the protein content may vary. It was found that simply keeping the protein content in the curd cheese constant did not suffice to obtain a product having a uniform quality/viscosity.

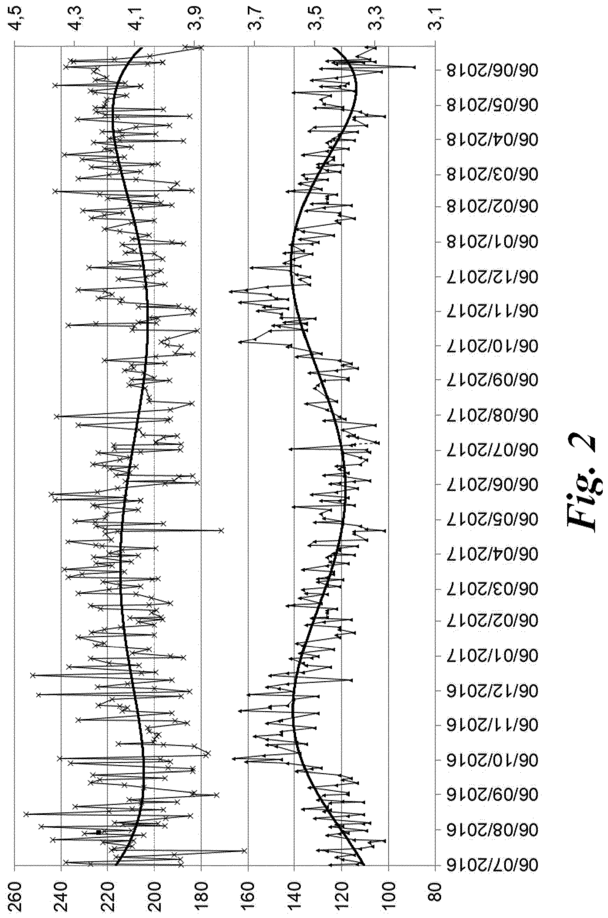

Figure 2, for instance, shows the variation of the protein contents measured over a period of two years in the milk used for the production of curd cheese, with an average viscosity of about 210 Pa.s.

The bottom chart shows the protein contents of the skimmed milk. This protein content varied from 3.17 g/100 ml to 3.78 g/100 ml. Also indicated in this chart is a sixth power curve that, based on least squares, best matches the different protein contents of the milk. The course of this curve shows a seasonal variation in the protein content of the milk.

The top chart shows the viscosity of the curd cheese produced using the milk having the indicated protein contents over the course of the same two years. In the production of the curd cheese, an effort was made to adjust the amount of milk so as to obtain a constant protein content in the curd cheese. When, during the production, the curd cheese produced was still found to be too viscous or too runny, the flow rate of the milk was further adjusted during production to the cheese maker's feeling, wherein the cheese maker thus increased the flow rate of the milk if the curd cheese was too runny and decreased it if the curd cheese was too viscous.

In the top chart, a sixth power curve is again indicated that, based on least squares, best matches the different viscosities of the curd cheese. The course of this curve shows that there is still a seasonal variation in the viscosity of the curd cheese, and that keeping the protein content in the curd cheese constant, even with additional manual correction, did not allow the variation in the viscosity of the curd cheese based on the varying protein content of the milk to be completely eliminated.

According to the invention, this is obviated by determining the flow rate at which the milk is fed to the centrifuge based on the following formula (I):

$$0.99 * \frac{(E_k - E_w) * Q_k}{E_m - E_w} < Q_m < 1.01 * \frac{(E_k - E_w) * Q_k}{E_m - E_w}$$

in which:

$E_k$ = the protein content in the curd cheese, expressed in g/ml;
$E_w$ = the protein content in the whey, expressed in g/ml;
$E_m$ = the protein content in the milk, expressed in g/ml;
$Q_k$ = the flow rate at which the curd cheese is separated out of the centrifuge; and
$Q_m$ = the flow rate at which the milk is fed to the centrifuge,

wherein $E_k$ equals a predetermined constant protein content ($E_{kc}$) of the curd cheese with which said viscosity of the curd cheese is obtained when the protein content ($E_m$) of the milk in said batch is lower than or equal to 0.0332 g/ml, wherein said predetermined constant protein content ($E_{kc}$) of the curd cheese is higher than the protein content ($E_m$) of said milk, and
wherein $E_k$ is determined by the following formula (II):

$$E_k = E_{kc} + 120.4 * E_m^2 - 8 * E_m + 0.1329$$

when the protein content ($E_m$) of the milk in said batch is higher than 0.0332 g/ml.

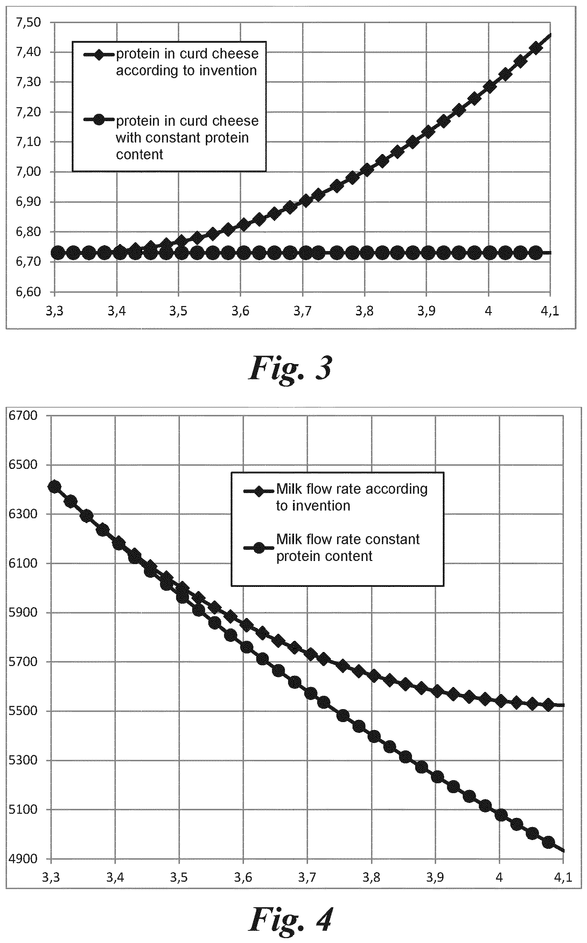

Figure 3 is a chart in which the protein content $E_k$ in the curd cheese, expressed in g/100 ml, is shown as a function of the protein content $E_m$ in the milk, likewise expressed in g/100 ml. This chart was drawn up based on the above formula II, in which 6.73 g/100 ml (= 0.0673 g/ml) was used as the base protein content $E_{kc}$ in the curd cheese.

From the protein content $E_k$ to be obtained in the curd cheese, and from the flow rate $Q_k$ of the curd cheese to be produced, the milk flow rate Qm can then be calculated, using formula I, which is required, as a function of the protein content $E_m$ in the milk, to obtain the exponentially increasing protein content $E_k$ in the curd cheese. Figure 4 shows this flow rate $Q_m$, in l/h, for a cheese flow rate $Q_k$ of 2800 l/h and a protein content $E_w$ in the whey of 0.0065 g/ml. The latter protein content can easily be measured and may be considered constant.

Figure 4 also shows the flow rate of the milk to be used for obtaining a constant protein content $E_k$ of 0.0673 g/ml in the curd cheese. Figure 4 thus shows that according to the invention, at the higher protein contents of the milk, a substantially higher amount of milk should be used than was previously the case. In the production, it was now found that such higher milk flow rates offer a solution to the problem of curd cheese that is too runny in the production of curd cheese using milk having a high protein content.

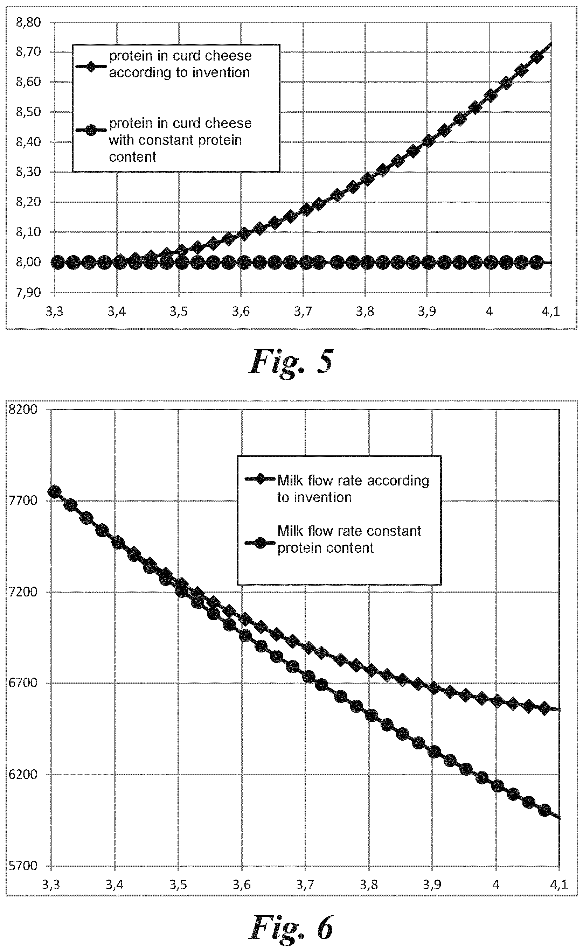

The above calculations were repeated for the production of a curd cheese with a fat content of 8.0 g/100 ml, at a same flow rate of 2800 l/h. The results of the protein content in the curd cheese as a function of the protein content in the milk are shown in figure 5, while the results of the milk flow rate as a function of the protein content in the milk are shown in figure 6. It is clear that the higher protein content in the curd cheese requires more milk.

**Claims**

1. Method for producing curd cheese of a predetermined viscosity from batches of fresh skimmed milk having a variable protein content ($E_m$), said method comprising the steps of:

   - providing a batch of fresh skimmed milk;
   - determining the protein content ($E_m$) of the milk in said batch;
   - pasteurizing and homogenizing the milk at a temperature of at least 85°C;
   - cooling the pasteurized milk;
   - acidifying and curdling the cooled pasteurized milk using lactic acid bacteria so as to produce curds;
   - thermizing the acidified milk at a temperature of at least 56°C;
   - cooling the thermized milk; and
   - by means of a continuous centrifuge, separating the thermized milk into whey containing a predetermined amount of protein (Ew), and into said curd cheese, wherein the thermized milk is fed to said centrifuge at a predetermined flow rate ($Q_m$) and wherein said curd cheese is separated from said centrifuge at a predetermined constant flow rate ($Q_k$), and said whey at a flow rate ($Q_w$), and wherein said predetermined flow rate ($Q_m$) of the thermized milk is determined as a function of the protein content ($E_m$) of said skimmed milk, **characterized in that**
   the flow rate ($Q_m$) at which the thermized milk is fed to the centrifuge is determined by the following formula:

$$0.99 * \frac{(E_k - E_w)*Q_k}{E_m - E_w} < Q_m < 1.01 * \frac{(E_k - E_w)*Q_k}{E_m - E_w},$$

   in which:

   $E_k$ = the protein content in the curd cheese, expressed in g/ml;
   $E_w$ = the protein content in the whey, expressed in g/ml;
   $E_m$ = the protein content in the milk, expressed in g/ml;
   $Q_k$ = the flow rate at which the curd cheese is separated out of the centrifuge; and
   $Q_m$ = the flow rate at which the milk is fed to the centrifuge,

   wherein:

   - $E_k$ equals a predetermined constant protein content ($E_{kc}$) of the curd cheese with which said viscosity of the curd cheese is obtained when the protein content ($E_m$) of the milk in said batch is lower than or equal to 0.0332 g/ml, wherein said predetermined constant protein content ($E_{kc}$) of the curd cheese is higher than the protein content ($E_m$) of said milk, and
   - $E_k$ is determined by the following formula:

$$E_k = E_{kc} + 120.4 * E_m^2 - 8 * E_m + 0.1329$$

   when the protein content ($E_m$) of the milk in said batch is higher than 0.0332 g/ml.

2. Method according to claim 1, **characterized in that** the flow rate ($Q_m$) at which the thermized milk is fed to the centrifuge is determined by the following formula:

$$Q_m = \frac{(E_k - E_w)*Q_k}{E_m - E_w}.$$

3. Method according to claim 1 or 2, **characterized in that** the protein content of the milk in said batch is determined after pasteurizing and homogenizing the milk, but before acidifying it.

4. Method according to any of the claims 1 to 3, **characterized in that** the viscosity of the produced curd cheese is determined after a predetermined period of time after the curd cheese leaving the centrifuge, in particular after a period of time of 24 hours.

5. Method according to any of the claims 1 to 4, **characterized in that** the pasteurization of the milk is carried out for 5 to 15 minutes at a temperature comprised between 85°C and 95°C.

6. Method according to any of the claims 1 to 5, **characterized in that** the thermization of the acidified milk is carried out so as to denature the serum proteins present in the acidified milk.

7. Method according to any of the claims 1 to 6, **characterized in that** the thermization of the acidified milk is carried out at a temperature comprised between 56°C and 65°C, preferably at a temperature of about 60°C, for at most 3 minutes.

8. Method according to any of the claims 1 to 7, **characterized in that** the curd cheese exiting the centrifuge is mixed with cream, fruit and/or yogurt.

9. Method according to any of the claims 1 to 8, **characterized in that** live cultures are added to the curd cheese.

10. Method according to claim 9, **characterized in that** said live cultures are fed to the centrifuge.

11. Method according to any of the claims 1 to 10, **characterized in that** said skimmed milk has a fat content which is lower than 0.005 g/ml.

12. Method according to any of the claims 1 to 11, **characterized in that** the pasteurized milk is acidified to a pH of less than 4.75, preferably to a pH of 4.45 to 4.50, before being thermized.

13. Method according to any of the claims 1 to 12, **characterized in that** said lactic acid bacteria comprise *Lactococcus lactis* spp. *lactis, Leuconostoc mesenteroides* spp. *cremoris* and *Lactococcus lactis* spp. *lactis* biovar. *diacetylactis.*

14. Method according to any of the claims 1 to 13, **characterized in that** in order to curdle the milk, rennet is added to it.


**Patentansprüche**

1. Verfahren zur Herstellung von Quark mit einer vorgegebenen Viskosität aus Chargen entrahmter Frischmilch mit einem variablen Proteingehalt ($E_m$), wobei das erwähnte Verfahren folgende Schritte umfasst:

   - Bereitstellen einer Charge von entrahmter Frischmilch;
   - Bestimmen des Proteingehalts ($E_m$) der Milch in der erwähnten Charge;
   - Pasteurisieren und Homogenisieren der Milch bei einer Temperatur von mindestens 85 °C;
   - Abkühlen der pasteurisierten Milch;
   - Ansäuern und zum Gerinnen Bringen der abgekühlten pasteurisierten Milch unter Verwendung von Milchsäurebakterien, um Käsebruch herzustellen;
   - Thermisieren der angesäuerten Milch bei einer Temperatur von mindestens 56 °C;
   - Abkühlen der thermisierten Milch; und
   - mittels einer Durchlaufzentrifuge, Trennen der thermisierten Milch in Molke, die einen vorgegebene Menge an Protein enthält (Ew), und in den erwähnten Quark, wobei die thermisierte Milch der erwähnten Zentrifuge mit einer vorgegebenen Durchflussrate ($Q_m$) zugeführt wird und wobei der erwähnte Quark von der erwähnten Zentrifuge bei einer vorgegebenen konstanten Durchflussrate ($Q_k$), und die erwähnte Molke bei einer Durchflussrate ($Q_w$) separiert wird, und wobei die erwähnte vorgegebene Durchflussrate ($Q_m$) der thermisierten Milch als Funktion des Proteingehalts ($E_m$) der erwähnten entrahmten Milch bestimmt wird,
   **dadurch gekennzeichnet, dass**
   die Durchflussrate ($Q_m$), bei der die thermisierte Milch der Zentrifuge zugeführt wird, nach der folgenden Formel bestimmt wird:

$$0{,}99 * \frac{(E_k - E_w) * Q_k}{E_m - E_w} < Q_m < 1{,}01 * \frac{(E_k - E_w) * Q_k}{E_m - E_w},$$

wobei:

$E_k$ = der Proteingehalt im Quark ist, ausgedrückt in g/ml;
$E_w$ = der Proteingehalt in der Molke ist, ausgedrückt in g/ml;
$E_m$ = der Proteingehalt in der Milch ist, ausgedrückt in g/ml;
$Q_k$ = die Durchflussrate ist, bei der der Quark aus der Zentrifuge separiert wird; und
$Q_m$ = die Durchflussrate ist, bei der die Milch der Zentrifuge zugeführt wird.

wobei:

- $E_k$ einem vorgegebenen konstanten Proteingehalt ($E_{kc}$) des Quarks entspricht, mit dem die erwähnte Viskosität des Quark erhalten wird, wenn der Proteingehalt ($E_m$) der Milch in der erwähnten Charge niedriger als oder gleich 0,0332 g/ml ist, wobei der erwähnte vorgegebene konstante Proteingehalt ($E_{kc}$) des Quarks höher ist als der Proteingehalt ($E_m$) der erwähnten Milch, und
- $E_k$ durch die folgende Formel bestimmt wird:

$$E_k = E_{kc} + 120.4 * E_m^2 - 8 * E_m + 0.1329$$

wenn der Proteingehalt ($E_m$) der Milch in der erwähnten Charge höher ist als 0,0332 g/ml.

2. Verfahren nach Anspruch 1, **dadurch gekennzeichnet, dass** die Durchflussrate ($Q_m$), bei der die thermisierte Milch der Zentrifuge zugeführt wird, nach der folgenden Formel bestimmt wird:

$$Q_m = \frac{(E_k - E_w) * Q_k}{E_m - E_w}.$$

3. Verfahren nach Anspruch 1 oder 2, **dadurch gekennzeichnet, dass** der Proteingehalt der Milch in der erwähnten Charge nach dem Pasteurisieren und Homogenisieren der Milch, aber vor deren Ansäuern bestimmt wird.

4. Verfahren nach irgendeinem der Ansprüche 1 bis 3, **dadurch gekennzeichnet, dass** die Viskosität des hergestellten Quarks nach einem vorgegebenen Zeitraum, nachdem der Quark die Zentrifuge verlassen hat, bestimmt wird, insbesondere nach einem Zeitraum von 24 Stunden.

5. Verfahren nach irgendeinem der Ansprüche 1 bis 4, **dadurch gekennzeichnet, dass** die Pasteurisierung der Milch für 5 bis 15 Minuten bei einer Temperatur von zwischen 85 °C und 95 °C ausgeführt wird.

6. Verfahren nach irgendeinem der Ansprüche 1 bis 5, **dadurch gekennzeichnet, dass** die Thermisierung der angesäuerten Milch ausgeführt wird, um die in der angesäuerten Milch vorhandenen Serumproteine zu denaturieren.

7. Verfahren nach irgendeinem der Ansprüche 1 bis 6, **dadurch gekennzeichnet, dass** die Thermisierung der angesäuerten Milch bei einer Temperatur zwischen 56 °C und 65 °C, bevorzugt bei einer Temperatur von ungefähr 60 °C, für höchstens 3 Minuten ausgeführt wird.

8. Verfahren nach irgendeinem der Ansprüche 1 bis 7, **dadurch gekennzeichnet, dass** der Quark, der die Zentrifuge verlässt, mit Sahne, Obst und/oder Joghurt vermischt wird.

9. Verfahren nach irgendeinem der Ansprüche 1 bis 8, **dadurch gekennzeichnet, dass** dem Quark lebende Kulturen zugesetzt werden.

10. Verfahren nach Anspruch 9, **dadurch gekennzeichnet, dass** die erwähnten lebenden Kulturen der Zentrifuge zugeführt werden.

**11.** Verfahren nach irgendeinem der Ansprüche 1 bis 10, **dadurch gekennzeichnet, dass** die erwähnte entrahmte Milch einen Fettgehalt hat, der geringer als 0,005 g/ml ist.

**12.** Verfahren nach irgendeinem der Ansprüche 1 bis 11, **dadurch gekennzeichnet, dass** die pasteurisierte Milch auf einen pH-Wert von weniger als 4,75 gesäuert wird, bevorzugt auf einen pH-Wert von 4,45 bis 4,50, bevor sie thermisiert wird.

**13.** Verfahren nach irgendeinem der Ansprüche 1 bis 12, **dadurch gekennzeichnet, dass** die erwähnten Milchsäurebakterien *Lactococcus lactis* spp. *lactis, Leuconostoc mesenteroides* spp. *cremoris* und *Lactococcus lactis* spp. *lactis* biovar. *diacetylactis* umfassen.

**14.** Verfahren nach irgendeinem der Ansprüche 1 bis 13, **dadurch gekennzeichnet, dass** zum Gerinnen der Milch dieser Chymosin zugesetzt wird.

## Revendications

**1.** Procédé de production de caillebotte d'une viscosité prédéterminée à partir de lots de lait écrémé frais ayant une teneur en protéines variable ($E_m$), ledit procédé comprenant les étapes consistant à :

- fournir un lot de lait écrémé frais ;
- déterminer la teneur en protéines ($E_m$) du lait dans ledit lot ;
- pasteuriser et homogénéiser le lait à une température d'au moins 85°C ;
- refroidir le lait pasteurisé ;
- acidifier et faire cailler le lait pasteurisé refroidi en utilisant des bactéries lactiques de façon à produire du caillé ;
- thermiser le lait acidifié à une température d'au moins 56°C ;
- refroidir le lait thermisé ; et
- au moyen d'une centrifugeuse continue, séparer le lait thermisé en lactosérum contenant une quantité prédéterminée de protéines ($E_w$), et en ladite caillebotte, où le lait thermisé est amené à ladite centrifugeuse à un débit prédéterminé ($Q_m$) et où ladite caillebotte est séparé de ladite centrifugeuse à un débit constant prédéterminé ($Q_k$), et ledit lactosérum à un débit ($Q_w$), et dans lequel ledit débit prédéterminé ($Q_m$) du lait thermisé est déterminé en fonction de la teneur en protéines ($E_m$) dudit lait écrémé,
**caractérisé en ce que**
le débit ($Q_m$) auquel le lait thermisé est amené à la centrifugeuse est déterminé par la formule suivante :

$$0.99 * \frac{(E_k - E_w) * Q_k}{E_m - E_w} < Q_m < 1.01 * \frac{(E_k - E_w) * Q_k}{E_m - E_w},$$

dans lesquelles :

$E_k$ = la teneur en protéines dans la caillebotte, exprimée en g/ml ;
$E_w$ = la teneur en protéines du lactosérum, exprimée en g/ml ;
$E_m$ = la teneur en protéines du lait, exprimée en g/ml ;
$Q_k$ = le débit auquel la caillebotte est séparée de la centrifugeuse ; et
$Q_m$ = le débit auquel le lait est introduit dans la centrifugeuse,

où :

- $E_k$ est égal à une teneur en protéines constante prédéterminée ($E_{kc}$) de la caillebotte avec laquelle ladite viscosité de la caillebotte est obtenue lorsque la teneur en protéines ($E_m$) du lait dans ledit lot est inférieure ou égale à 0,0332 g/ml, dans lequel ladite teneur en protéines constante prédéterminée ($E_{kc}$) de la caillebotte est supérieure à la teneur en protéines ($E_m$) dudit lait, et
- $E_k$ est déterminée par la formule suivante :

$$E_k = E_{kc} + 120.4 * E_m^2 - 8 * E_m + 0.1329$$

lorsque la teneur en protéines (Em) du lait dans ledit lot est supérieure à 0,0332 g/ml.

2. Procédé selon la revendication 1, **caractérisé en ce que** le débit ($Q_m$) auquel le lait thermisé est amené à la centrifugeuse est déterminé par la formule suivante :

$$Q_m = \frac{(E_k - E_w) * Q_k}{E_m - E_w}.$$

3. Procédé selon la revendication 1 ou 2, **caractérisé en ce que** la teneur en protéines du lait dudit lot est déterminée après pasteurisation et homogénéisation du lait, mais avant son acidification.

4. Procédé selon l'une quelconque des revendications 1 à 3, **caractérisé en ce que** la viscosité de la caillebotte produit est déterminée après une période de temps prédéterminée après la sortie de la caillebotte de la centrifugeuse, en particulier après une période de temps de 24 heures.

5. Procédé selon l'une quelconque des revendications 1 à 4, **caractérisé en ce que** la pasteurisation du lait est effectuée pendant 5 à 15 minutes à une température comprise entre 85°C et 95°C.

6. Procédé selon l'une quelconque des revendications 1 à 5, **caractérisé en ce que** la thermisation du lait acidifié est réalisée de manière à dénaturer les protéines sériques présentes dans le lait acidifié.

7. Procédé selon l'une quelconque des revendications 1 à 6, **caractérisé en ce que** la thermisation du lait acidifié est effectuée à une température comprise entre 56°C et 65°C, de préférence à une température d'environ 60°C, pendant au plus 3 minutes.

8. Procédé selon l'une quelconque des revendications 1 à 7, **caractérisé en ce que** la caillebotte sortant de la centrifugeuse est mélangé à de la crème, des fruits et/ou du yaourt.

9. Procédé selon l'une quelconque des revendications 1 à 8, **caractérisé en ce que** des cultures vivantes sont ajoutées à la caillebotte.

10. Procédé selon la revendication 9, **caractérisé en ce que** lesdites cultures vivantes sont introduites dans la centrifugeuse.

11. Procédé selon l'une quelconque des revendications 1 à 10, **caractérisé en ce que** ledit lait écrémé a une teneur en matière grasse qui est inférieure à 0,005 g/ml.

12. Procédé selon l'une quelconque des revendications 1 à 11, **caractérisé en ce que** le lait pasteurisé est acidifié à un pH inférieur à 4,75, de préférence à un pH de 4,45 à 4,50, avant d'être thermisé.

13. Procédé selon l'une quelconque des revendications 1 à 12, **caractérisé en ce que** lesdites bactéries lactiques comprennent les suivants : *Lactococcus lactis* spp. *lactis, Leuconostoc mesenteroides* spp. *cremoris* et *Lactococcus lactis* spp. *lactis biovar. diacetylactis.*

14. Procédé selon l'une quelconque des revendications 1 à 13, **caractérisé en ce que** pour faire cailler le lait, on lui ajoute de la présure.

*Fig.1*

*Fig. 2*

**Fig. 3**

**Fig. 4**

*Fig. 5*

*Fig. 6*

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5853786 A

**Non-patent literature cited in the description**

- **HATTEM, H. E. et al.** Effect of pasteurisation and season on milk composition and ripening of Ras cheese. *Journal of Brewing and Distilling,* March 2012, vol. 3 (2), 15-22

- **CHANOKPHAT PHADUNGATH ; SONGKLANA-KARIN.** The mechanism and properties of acid-co-agulated milk gels. *J. Sci. Technol.,* 2005, vol. 27 (2), 433-448